# EUROPÄISCHE PATENTSCHRIFT

(11) **EP 0 710 916 B1**
(45) Veröffentlichungstag und Bekanntmachung des Hinweises auf die Patenterteilung: **02.10.2002**
(21) Anmeldenummer: 95110654.1
(22) Anmeldetag: 08.07.1995
(51) Int. Cl.: G06F 17/60, G06F 1/32

(54) **Anlage zur elektronischen Preisanzeige**
Electronic price display apparatus
Dispositif électronique d'affichage de prix

(30) Priorität: 02.11.1994 DE 4439074
(43) Veröffentlichungstag der Anmeldung: 08.05.1996
(73) Patentinhaber: Pricer AB, 754 51 Uppsala (SE)
(72) Erfinder: Altwasser, Richard, D-76694 Forst bei Bruchsal (DE)
(74) Vertreter: Mrazek, Werner

(56) Entgegenhaltungen:
- EP-A- 0 396 414
- EP-A- 0 447 278
- EP-A- 0 529 269
- WO-A-92/16901
- US-A- 5 299 117

## Beschreibung

Die Erfindung bezieht sich auf eine Anlage zur elektronischen Preisanzeige, mit einem Computer, einem daran angeschlossenen Steuersender sowie vorzugsweise an Regalen befestigten, elektronischen Anzeigeeinheiten, wobei der Steuersender mittels elektromagnetischer Wellen Datenübertragungsblöcke zur Aktualisierung der Anzeigeeinheiten überträgt, die die spezifische Adresse einer Anzeigeeinheit und die anzuzeigenden Daten beinhalten und die Anzeigeeinheiten einen Empfänger zur Aufnahme der Datenübertragungsblöcke enthalten, der periodisch aktiviert wird.

Elektronische Preisanzeigesysteme sind mit einer hohen Anzahl elektronischer Anzeigeeinheiten ausgestattet, die beispielsweise an den Kanten von Regalen in Verkaufseinrichtungen befestigt sind und den Preis sowie möglicherweise weitere Verkaufsinformationen für das Produkt wiedergeben, das auf dem jeweiligen Regal angeboten wird. Jede Anzeigeeinheit steht mit einem zentralen Computer in Verbindung, in dem eine den aktuellen Preis und die Nummer jedes vertriebenen Artikels enthaltende Datei gespeichert ist. Der entscheidende Vorteil elektronischer Preisanzeigesysteme gegenüber konventionellen, nicht-elektronischen, an den Regalkanten befestigten Preisschildern besteht darin, daß eine Preisänderung elektronisch an die jeweilige Anzeigeeinheit weitergegeben werden kann, so daß das Anzeigeelement den neuen Preis ohne jegliche manuelle Maßnahme wiedergibt. Ein weiterer Vorteil der elektronischen Preisanzeigesysteme ist die Möglichkeit, sogar während der Öffnungszeiten innerhalb kurzer Zeit Preisänderungen durchzuführen, um sich einem wechselnden Kunden-Profil anzupassen. Schließlich ist jederzeit gewährleistet, daß der an den Regalen angezeigte Preis mit dem im zentralen Computer gespeicherten und an der Kasse geforderten Betrag jederzeit exakt übereinstimmt.

Ein kritischer Parameter - beispielsweise aus der gattungsbildenden DE 37 31 852 A1 bekannter - konventioneller, mit Batteriestrom betriebener Anzeigeeinheiten ist der Energiebedarf, der möglichst gering sein werden sollte, um kleine und preiswerte Batterien verwenden zu können und eine hohe Lebensdauer zu gewährleisten. Derartige Anzeigeeinheiten sind in der Lage, in mindestens zwei unterschiedlichen Betriebsarten zu arbeiten: Einerseits in einem Anzeige-Modus, in dem die gespeicherten Daten auf einem Anzeigeelement wiedergegeben werden und andererseits in einem Empfangs-Modus, in dem zusätzlich ein Empfänger eingeschaltet ist, um die vom zentralen Computer mittels eines Steuersenders emittierten Daten aufnehmen zu können.

Bei den konventionellen elektronischen Preisanzeigesystemen verbringt jede Anzeigeeinheit einen geringen Anteil der Zeit im Empfangs-Modus, in dem sie Datenübertragungen vom Zental-Computer erwartet. Sollen Daten an eine einzelne Anzeigeeinheit übertragen werden, muß der Computer ihnen eine Einleitung (Präambel) voranstellen, um zu gewährleisten, daß alle Anzeigeeinheiten (und somit die zu aktualisierende) im Empfangs-Modus sind. Falls eine Anzeigeeinheit in den Empfangs-Modus übergeht und eine Einleitung erhält, verbleibt sie solange darin, bis sie entweder an sie adressierte Daten empfängt oder anhand der Daten erkennen kann, daß die Daten an eine andere Einheit adressiert sind.

In den bekannten elektronischen Preisanzeigesystemen ist jede Anzeigeeinheit etwa 1 bis 5 % der Zeit im Empfangs-Modus. Die im folgenden als Tₒₙ bezeichnete Einschaltzeit des Empfängers ist durch den Zeitraum festgelegt, den er benötigt, um zu entscheiden, ob der Steuersender eine Einleitung überträgt. Die als T_{off} gekennzeichnete, im Anzeigemodus verbrachte Zeit ist hingegen durch die Geschwindigkeit, mit der eine Verkaufseinrichtung die Gesamtheit ihrer Anzeigeeinheiten aktualisieren kann, bestimmt. Falls der von einer Anzeigeeinheit wiedergegebene Wert zu ändern ist, muß der zentrale Computer stets eine Einleitung übersenden, die zumindest Tₒₙ + T_{off} lang ist, um sicherzustellen, daß alle Einheiten im Empfangs-Modus sind, bevor er die jeweilige Adresse und die entsprechenden Daten übertragen kann.

Weiterhin aktualisiert der Computer konventioneller Preisanzeigesysteme die Einheiten sukzessive nacheinander und erwartet zwischenzeitlich eine Bestätigung, daß die Botschaft korrekt empfangen wurde. Man kann daher feststellen, daß der zentrale Computer bekannter Systeme nach dem Absenden einer Einleitung über den Zeitraum Tₒₙ + T_{off} (so daß sichergestellt ist, daß alle Anzeigeeinheiten im Empfangs-Modus sind) über ein Intervall T_{c} weitersenden muß, um die Adresse des zu aktualisierenden Elementes bekanntzugeben. Erst nach diesem Zeitraum können die nicht adressierten Anzeigeeinheiten den Empfangs-Modus verlassen. Die angesprochenen Einheiten bleiben für einen Zeitraum T_{d} im Empfangs-Modus, so daß ein korrekter Daten-Empfang möglich ist. Falls keine Anzeigeeinheiten zu aktualisieren sind, verbleiben sie innerhalb jeder Periode Tₒₙ + T_{off} für die Zeit Tₒₙ im Empfangsmodus. Schließlich kann noch eine Zeit Tᵣ definiert werden, die eine Anzeigeeinheit benötigt, um eine Bestätigung für korrekt empfangene Daten an den Steuersender und somit an den Computer zu übertragen. Ein konventionelles elektronisches Preisanzeige-System benötigt für die Aktualisierung von N Anzeigeeinheiten die Gesamtzeit N(Tₒₙ + T_{off} + T_{d} + Tᵣ).

Eine Anlage zur elektronischen Preisanzeige wurde im Dokument EP-A-0 447 278, SITOUR ELECTRONIC SYSTEMS, 18.September 1991 beschrieben. Diese Anlage weist einen Computer und einen daran angeschlossenen Steuersender auf. Diese Anlage besteht weiter aus elektronischen Anzeigeeinheiten, die an den Regalen befestigt werden (wie konventionelle Preisschilder).
Der Steuersender ist ein Radiosender, der mittels elektromagnetischer Wellen die Anzeigeeinheiten aktualisiert.
Die Anzeigeeinheiten werden mittels einer elektronischen Adresse adressiert.
Die Anzeigeeinheiten beinhalten einen Empfänger, der periodisch aktiviert wird. Weiterhin wird die interne Uhr einer solchen Anzeigeeinheit durch diese periodische Aktivierung synchronisiert, so daß sich ein Empfänger nach Empfang des Signals ausschaltet und sich erst nach einer gewissen Zeit wieder einschaltet, um weitere Daten zu empfangen. Die Datenpakete werden für unterschiedliche Anzeigeeinheiten unmittelbar nacheinander übertragen.
Die Ausschaltungsdauer entspricht der Zeit bis zum nächsten Datenpaket und wird mittels abgestrahlter Synchronisationssignale bestimmt. Damit alle Anzeigeeinheiten das Synchronisationssignal bekommen, wird es lang genug ausgestrahlt.

Eine Aufgabe der vorliegenden Erfindung besteht somit darin, den Strombedarf der Anzeigeeinheiten zu minimieren.

Diese Aufgabe wird dadurch gelöst, daß daß die Anzeigeeinheiten Einrichtungen zum synchronen Einschalten der Empfänger aufweisen, die die Empfänger gleichzeitig mit dem Beginn der Ausstrahlung eines Datenübertragungsblockes durch den Steuersender aktivieren.

Die Grundidee besteht darin, die Empfänger der Anzeigeeinheiten mittels geeigneter Einrichtungen derart zu synchronisieren, daß sie zum gleichen Zeitpunkt, der auch mit dem Beginn der Übertragung einer Einleitung eines Datenübertragungsblocks durch den Steuersender übereinstimmt, in den Empfangs-Modus übergehen. Der Steuersender braucht deshalb die Einleitung nur noch über das Zeitintervall Tₒₙ zu übertragen, - und nicht mehr über Tₒₙ + T_{off} - da alle Anzeigeeinheiten synchron, d.h. gleichzeitig in den Empfangs-Modus eintreten, so daß gewährleistet ist, daß sie die entsprechenden Daten empfangen. Während bei den bekannten Anlagen die nicht adressierten Anzeigeeinheiten durchschnittlich über den Zeitraum 0,5(Tₒₙ + T_{off}) + T_{c} im Empfangs-Modus sein müssen, erweist es sich nunmehr nur noch als notwendig, sie über die Zeit Tₒₙ + T_{c} einzuschalten. Die aktualisierten Anzeigeeinheiten sind statt über die durchschnittliche Zeit 0,5(Tₒₙ + T_{off}) + T_{d} der konventionellen Systeme nur noch über Tₒₙ + T_{d} im Empfangs-Modus.

Der Energiebedarf der Anzeigeeinheiten ist aufgrund der verkürzten Anschaltzeiten des Empfängers wesentlich reduziert, ohne die Aktualisierungszeiten nachteilig zu beeinflussen. Die Betriebsdauer der Anzeigeeinheiten ist bei Verwendung gleicher Batterien verkürzt; alternativ können bei gleicher Lebensdauer kleinere und preiswertere Batterien zur Verwendung kommen.

Zur Synchronisation der Anzeigeeinheiten erweist sich eine darin integrierte Uhr als zweckmäßig, die den Empfänger jeweils für den festgelegten Zeitraum Tₒₙ + T_{c} (falls er keine an die jeweilige Anzeigeeinheit adressierten Daten empfängt) bzw. Tₒₙ + T_{d} aktiviert und für die Zeit T_{off} ausschaltet. Eine derartige Uhr kann mit einem Schwingquarz und kommerziell erhältlichen Schaltkreisen realisiert werden.

Falls man die Synchronisierung ausschließlich mittels einer internen Uhr vornähme, würde sich als nachteilig erweisen, daß die Uhren aller Anzeigeeinheiten in aufwendiger Weise beispielsweise bei der Installation des Systems in Übereinstimmung zu bringen, d.h. zurückzusetzen wären. Außerdem kann die Synchronisierung aufgrund unvermeidbarer Toleranzen der frequenzbestimmenden Elemente (Schwingquarz) nur über einen gewissen Zeitraum aufrechterhalten werden. Es erweist sich daher als zweckmäßig, die internen Uhren der Anzeigeeinheiten mittels des Steuersenders, also emittierter Synchronisationssignale regelmäßig zu aktualisieren. Letztere können in den Datenübertragungsblöcken enthalten oder ihnen vorangestellt sein oder ihnen folgen. Beispielsweise kann also die Einleitung des Datenübertragungsblockes als Synchronisierungssignal dienen.

Die Synchronisation der Anzeigeeinheiten kann bei einem Ausfall des Steuersenders oder bei Störungen der Funkverbindung verloren gehen. Es wäre zwar denkbar, die Empfänger nicht synchronisierter Anzeigeeinheiten kontinuierlich in Betrieb zu setzen, so daß sie sehr schnell wieder aktualisiert werden können, jedoch wäre der Stromverbrauch - insbesondere bei einem defekten Steuersender oder einer auf Dauer gestörten Verbindung - unnötig hoch. Daher ist vorgeschlagen, den Empfänger einer desynchronisierten Anzeigeeinheit so lange periodisch in Betrieb zu setzen, bis er ein zur Aktualisierung der inneren Uhr geeignetes Signal, d.h. ein Synchronisationssignal empfängt. Um zu verhindern, daß der Empfänger nur in Pausen des Steuersenders (d.h. in der Zeit T_{off}) aktiv wird, bietet sich erfindungsgemäß an, die Periodendauer abweichend von der Zeit zu wählen, die zwischen zwei Synchronisationssignalen verstreicht. So ist nach einer gewissen Zeitspanne der Empfang eines Synchronisationsignales gewährleistet. Im Rahmen des erfindungsgemäßen Gedankens ist die Strategie, mit der das (Wieder-) Erreichen der Synchronisation angestrebt wird, d.h. die Wahl der Periodendauer und der Anschaltzeit des desynchronisierten Empfängers sowie des zwischen zwei Synchronisationssignalen verstreichenden Zeitraumes beliebig, obwohl eine schnelle Synchronisation bei minimaler Einschaltzeit bevorzugt ist. Denkbar wäre weiterhin, die Zeit zwischen zwei aufeinanderfolgenden Synchronisationssignalen des Steuersenders zu verkürzen, falls er eine entsprechende Rückmeldung von einer unsynchronisierten Anzeigeeinheit empfängt.

Außerdem ist empfohlen, mehrere Anzeigeeinheiten innerhalb desselben Datenübertragungsblocks zu aktualisieren, um die im Durchschnitt von den Anzeigeeinheiten im Empfangsmodus verbrachte Zeit weiter zu reduzieren. Es werden somit Datenpakete für unterschiedliche Anzeigeeinheiten unmittelbar nacheinander übertragen, ohne daß der Computer auf ihre Rückantwort wartet. In konventionellen Systemen ist jede Anzeigeeinheit bei N sukzessive nacheinander zu aktualisierenden Anzeigeeinheiten durchschnittlich für die Zeit 0,5N(Tₒₙ + T_{off}) + (N-1)T_{c} + T_{d} im Empfangsmodus, während der Empfänger in dieser Ausführungsform der Erfindung nur noch über den wesentlich verkürzten Zeitraum Tₒₙ + T_{d} eingeschaltet sein muß. Dabei ist das Zeitintervall T_{d} hinreichend lang zu wählen, um eine entsprechend hohe Zahl von Datenpaketen in dem Datenübertragungsblock unterbringen zu können. Dabei erweist sich zur Verminderung des Strombedarfs von Vorteil, daß die Anzeigeeinheiten Einrichtungen aufweisen, die die Empfänger nach dem Empfang der Einleitung eines Datenübertragungsblockes ausschalten und bei Beginn der Übertragung eines ihnen zugeordneten Datenpaketes durch den Steuersender wieder einschalten, so daß die Empfänger nur für minimal kurze Zeit eingeschaltet sind.

Die Bestätigungsmeldung über ein korrekt empfangenes Datenpaket wird von den Anzeigeeinheiten vorteilhafterweise am Ende des Datenübertragungsblocks - d.h. nach der Übertragung der Datenpakete - in der Regel mittels elektromagnetischer Wellen an den Computer übertragen, wobei jeder Anzeigeeinheit ein eigenes, spezifisches Zeitfenster zugeordnet wird. Da der zentrale Computer die Rückmeldungen benötigt, um festzustellen, ob die angezeigten Preise nunmehr mit den im Hauptspeicher enthaltenen übereinstimmen, muß jede aktualisierte Anzeigeeinheit innerhalb eines ihr zugeordneten Zeitfensters eine Bestätigungsmeldung zurücksenden, wobei ebenfalls elektromagnetische (Infrarot- oder Radio-) Wellen Verwendung finden. Der Computer kann anhand des Empfangszeitpunktes der Bestätigungsmeldung unschwer erkennen, welche Anzeigeeinheit geantwortet hat und bei welcher Übertragungsstörungen auftraten. Im letztgenannten Fall wird im nachfolgenden Datenübertragungsblock erneut ein entsprechendes Datenpaket übertragen.

In einer bevorzugten Ausführungsform der Erfindung sind die Anzeigeeinheiten in logische Gruppen unterteilt. Alle Empfänger derselben Gruppe treten synchron in den Empfangs-Modus ein, wobei die Einschaltzeitpunkte unterschiedlicher Gruppen voneinander abweichen. Da jede Gruppe wesentlich seltener, nämlich nur noch an den ihr zugeordneten Zeitpunkten in den Empfangs-Modus übergeht, ist der mittlere Energiebedarf weiter vermindert. Falls die gesamte Anlage N Anzeigeeinheiten aufweist, die in M Gruppen von jeweils P Einheiten unterteilt sind, ist jede von ihnen durchschnittlich über den Zeitraum Tₒₙ + T_{d} im Empfangsmodus, bis alle Anzeigeeinheiten aktualisiert sind. Dieses bedeutet eine signifikante Verkürzung des Wertes 0,5N(Tₒₙ + T_{off}) + (N-1)T_{c} + T_{d} konventioneller Anlagen (der im Regelfall mit 0,5NT_{off} gleichgesetzt werden kann, da T_{off} wesentlich größer als Tₒₙ, T_{c} und T_{d} ist).

Die Einteilung der Anzeigeeinheiten in Gruppen kann auch unabhängig von ihrer Position in der Verkaufseinrichtung bzw. von der Art des Artikels, dessen Preis sie anzeigen, erfolgen.

Wird diese Ausführungsform mit der Lehre der Ansprüche 2 und 4 kombiniert, ist die für das Aktualisieren der gesamten Anlage benötigte Zeit auf M(Tₒₙ+T_{off}) + N(T_{d} + Tᵣ) reduziert, falls jeweils alle P Anzeigeeinheiten innerhalb eines Datenblockes adressiert werden. Dabei ist entscheidend, daß die Zeit T_{off} nur noch von geringer Bedeutung ist. Sie kann somit verlängert werden, um die zum Verhältnis Tₒₙ/(Tₒₙ + T_{off}) proportionale Energieaufnahme der - nicht aktualisierten - Anzeigeeinheiten zu minimieren.

Außerdem ist die Aktualisierungszeit des Gesamtsystems (und, wie bereits bemerkt, auch der einzelnen Anzeigeeinheiten) vermindert, so daß die Ausschaltzeit T_{off} bei gleichen Aktualisierungs-Geschwindigkeiten um den Faktor [MTₒₙ + MT_{off} + N(T_{d} + Tᵣ)]/(NT_{off}) vergrößert werden kann. Falls keine Anzeigeeinheit aktualisiert wird, ist die Energieaufnahme des Empfängers um näherungsweise denselben Faktor reduziert, während sie bei Aktualisierung aller Anzeigeeinheiten etwa um den Faktor (Tₒₙ + T_{d})/(0,5NT_{off}) sinkt. In der Praxis senken die genannten Maßnahmen in ihrer Gesamtheit die Stromaufnahme des Empfangsteils der Anzeigeeinheiten um mehrere Größenordnungen, so daß sie keinen signifikanten Beitrag zum gesamten Betriebsstrom mehr darstellt, ohne daß sich die Aktualisierungsfrequenz ändert.

Weiterhin ist empfohlen, die bisher in binärem Format oder in binär kodiertem Dezimalformat vom Computer auf die Anzeigeeinheiten übertragenen, in der Regel mittels Sieben-Segment-Anzeigen wiedergegebenen Preisdaten in einem Datenformat zu übermitteln, bei dem eine Binärinformation einem Segment der Anzeigeelemente der Anzeigeeinheit entspricht. Der zentrale Computer konvertiert somit die numerischen Daten in ein Sieben-Bit-Muster, das einer Sieben-Segment-Anzeige entspricht, und übermittelt letzteres dem Steuersender. Der Vorteil besteht in den damit gewonnenen, erweiterten Anzeigemöglichkeiten, die mit konventionellen Sieben-Segment-Anzeigen realisierbar werden: Der zentrale Computer kann beispielsweise die Segmente über die Ziffern 0 bis 9 hinausgehend derart ansteuern, daß nicht-numerische Muster oder Buchstaben wiedergegeben werden. In einer anderen Ausführungsform kommen eine oder mehrere sogenannte Starburst-Anzeigen mit 14 Segmenten zum Einsatz, die neben horizontal und vertikal verlaufenden auch diagonal orientierte Segmente aufweisen. Sie können sowohl Ziffern als auch Buchstaben anzeigen. Auch Punktmatrix-Anzeigen können zur Anzeige von Buchstaben, Ziffern sowie beliebiger anderer, nicht alphanumerischer Symbole dienen. Schließlich können auch speziell gestaltete Symbole zur Verwendung kommen, die jeweils als einzelnes Segment mittels eines einzelnen Bits angesteuert werden.

Als Anzeigeelemente kommen aufgrund des geringen Strombedarfes primär Flüssigkristall-Anzeigen (LCDs) in Frage.

Die Anzeigeeinheiten können außer durch Batterien auch durch Akkumulatoren und/oder Solarzellen mit elektrischem Strom versorgt werden.

Schließlich sind zur Übertragung der Datenpakete Radio- oder Infrarotwellen vorgeschlagen.

Im folgenden werden Ausführungsformen der Erfindung anhand der Zeichnungen näher erläutert. Sie zeigen in schematischer Darstellung in
- Figur 1:: ein Prinzipschaltbild einer Anlage zur elektronischen Preisanzeige,
- Figur 2:: den Energiebedarf einer Anzeigeeinheit,
- Figur 3:: die Datenübertragung eines bekannten Systems,
- Figur 4:: die Datenübertragung einer erfindungsgemäßen Anlage,
- Figur 5:: die Datenübertragung einer erfindungsgemäßen Anlage, in der Rückmeldungen im Anschluß an einen Datenblock erfolgen,
- Figur 6:: die Datenübertragung einer in Gruppen unterteilten, erfindungsgemäßen Anlage,
- Figuren 7 bis 11:: unterschiedliche Anzeigeelemente.

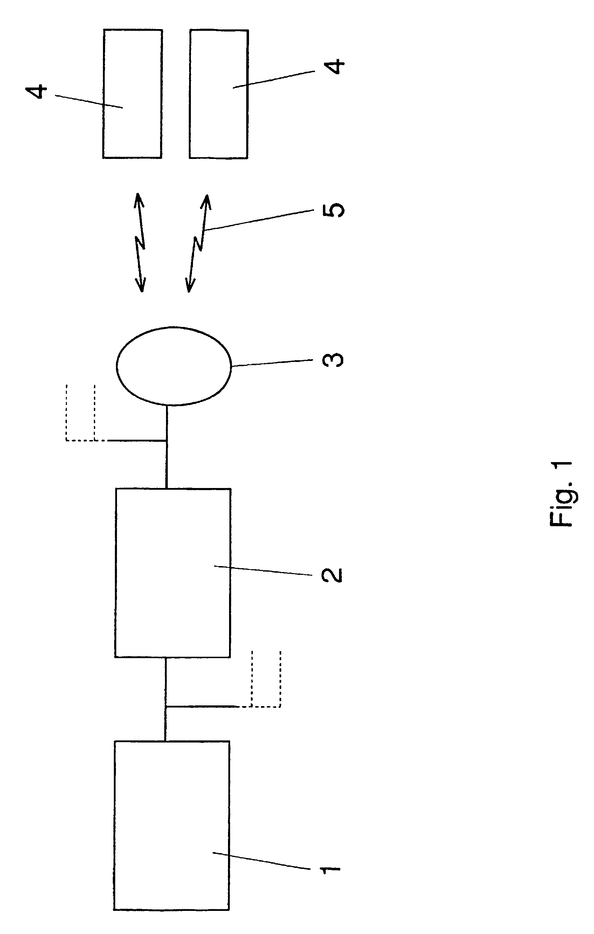

Die Figur 1 zeigt ein elektronisches Preisanzeigesystem, das einen zentralen Computer (1) umfaßt, in dem eine den Preis und die Nummer der (im englischen Sprachgebrauch als "Stock Keeping Unit" bezeichneten) Artikel enthaltende Datei gespeichert ist. Der zentrale Computer (1) kommuniziert mit einem oder mehreren Steuersendern (2), die an jeweils einer oder mehreren Radiofrequenz-Antennen (3) angeschlossen sind. Die Antennen (3) sind derart positioniert, daß eine Datenübertragung zu allen Anzeigeeinheiten (4) in der Verkaufseinrichtung durch Radiowellen (5) möglich ist. Die u.a. an den Kanten der Regale befestigten Anzeigeeinheiten (4) empfangen aktualisierte Preis-Informationen vom Steuersender (2) und antworten mit Bestätigungs-Signalen.

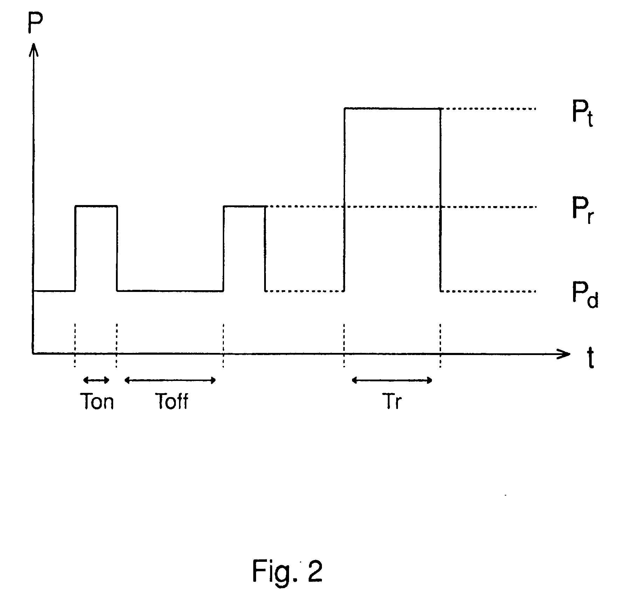

Figur 2 zeigt auf der Ordinate die logarithmisch aufgetragene Leistungsaufnahme der Anzeigeeinheiten (4), während die Abszisse die Zeitachse darstellt. Falls die Anzeigeeinheit (4) keine Datenpakete empfängt, benötigt sie nur ein Minimum an Leistung, um die Flüssigkristallanzeigen in Betrieb zu setzen. Sie ist als P_{d} gekennzeichnet. Für das Zeitintervall Tₒₙ in jeder Periode Tₒₙ + T_{off} wird der Empfänger eingeschaltet, um zu prüfen, ob der Steuersender eine Einleitung (Präambel) ausstrahlt. Diese Betriebsart wird als Empfangs-Modus bezeichnet und die Leistungsaufnahme mit Pᵣ gekennzeichnet. Normalerweise ist Pᵣ sehr viel größer als P_{d} und daher wird auch T_{off} wesentlich größer als Tₒₙ gewählt, um die durchschnittliche Leistungsaufnahme zu minimieren. Falls die Anzeigeeinheit (4) aktualisierte Daten vom zentralen Computer (1) korrekt empfängt, emittiert sie ihrerseits eine Antwort zur Bestätigung des Empfangs. Diese Betriebsart wird als Sende-Modus bezeichnet und erfordert die Leistungsaufnahme Pₜ. Gewöhnlich ist Pₜ wesentlich größer als Pᵣ und P_{d}, weshalb die Sendezeit Tᵣ möglichst kurz gehalten werden sollte.

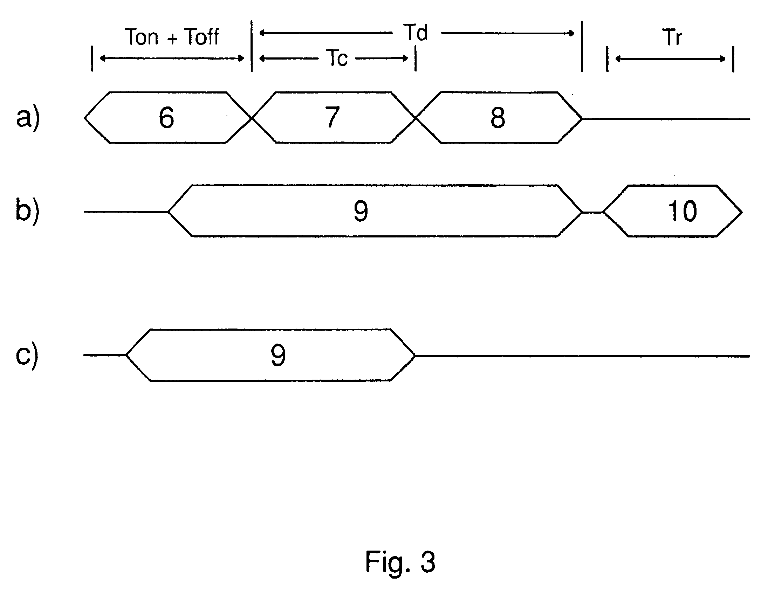

In Figur 3 ist die Kommunikation zwischen dem Steuersender (2) (Buchstabe a)) und zwei Anzeigeeinheiten (4) (Buchstaben b) und c)) eines konventionellen Systems dargestellt. Der Steuersender (2) sendet zunächst eine Einleitung (Präambel) (6) aus, der eine Adressierung (7) und die neuen, anzuzeigenden Daten (8) folgen. Die Anzeigeeinheit b) geht an einem dem Beginn der Einleitung (6) folgenden Zeitpunkt in den Empfangsmodus (9) über und stellt anhand der empfangenen Einleitung (6) fest, daß sie im Empfangs-Modus (9) verbleiben muß. Nach dem Ablauf der Zeit T_{c} ist ihr bekannt, daß die Adressierung (7) für sie bestimmt ist. Nach der Zeit T_{d} sind alle Daten (8) an die Anzeigeeinheit b) übertragen und sie geht in den Sende-Modus (10) über, um den korrekten Empfang zu bestätigen. Die Anzeigeeinheit c) bleibt wegen der empfangenen Einleitung (6) im Empfangs-Modus (9), beendet ihn jedoch, sobald anhand der Adressierung (7) erkennbar ist, daß die Daten (8) nicht für sie bestimmt sind. Da die Anzeigeeinheiten b) und c) hier nicht synchronisiert sind, erweist es sich für den Steuersender (2) als erforderlich, die Einleitung (6) zumindest über den Zeitraum Tₒₙ + T_{off} auszustrahlen, um sicherzugehen, daß alle Anzeigeeinheiten (4) beim Beginn der Adressierung im Empfangs-Modus (9) sind. Anhand der Figur 3 ist erkennbar, daß die von einer aktualisierten Anzeigeeinheit (4) durchschnittlich im Empfangs-Modus verbrachte Zeit 0,5(Tₒₙ + T_{off}) + T_{d} entspricht. Eine nicht adressierte Anzeigeeinheit (4) benötigt hingegen 0,5(Tₒₙ + T_{off}) + T_{c}, um zu erkennen, daß die Daten nicht für sie bestimmt sind.

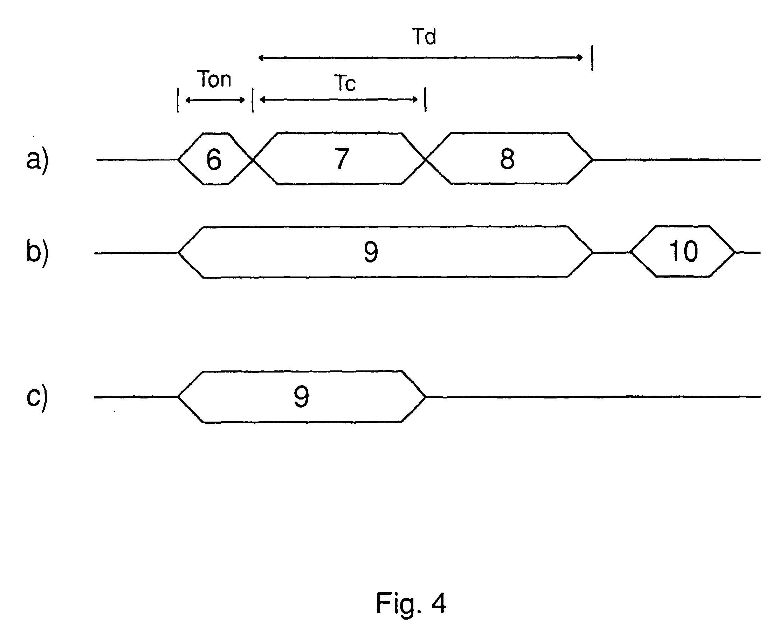

Die Figur 4 stellt die Kommunikation zwischen dem Steuersender (Buchstabe a)) und zwei Anzeigeeinheiten (Buchstaben b) und c)) dar. Die Anzeigeeinheit b) erkennt anhand der Adressierung (7), daß die Daten (8) für sie bestimmt sind, bleibt im Empfangsmodus (9) und sendet schließlich eine Bestätigung (10) an den Steuersender a) zurück. Die Anzeigeeinheit c) beendet den Empfangs-Modus (9) wesentlich eher, da die Adressierung (7) nicht an sie gerichtet ist. Da die Anzeigeeinheiten b) und c) synchronisiert sind, braucht der Steuersender a) die Einleitung (6) nur über den Zeitraum Tₒₙ auszustrahlen, um sicherzugehen, daß alle Anzeigeeinheiten im Empfangs-Modus (9) sind. Es wäre auch denkbar, auf die Einleitung (6) gänzlich zu verzichten. Es ist offensichtlich, daß die durchschnittlich im Empfangs-Modus (9) verbrachte Zeit der aktualisierten Anzeigeeinheit b) Tₒₙ + T_{d} ist, während die nicht adressierte Anzeigeeinheit c) Tₒₙ + T_{c} darin verbleibt.

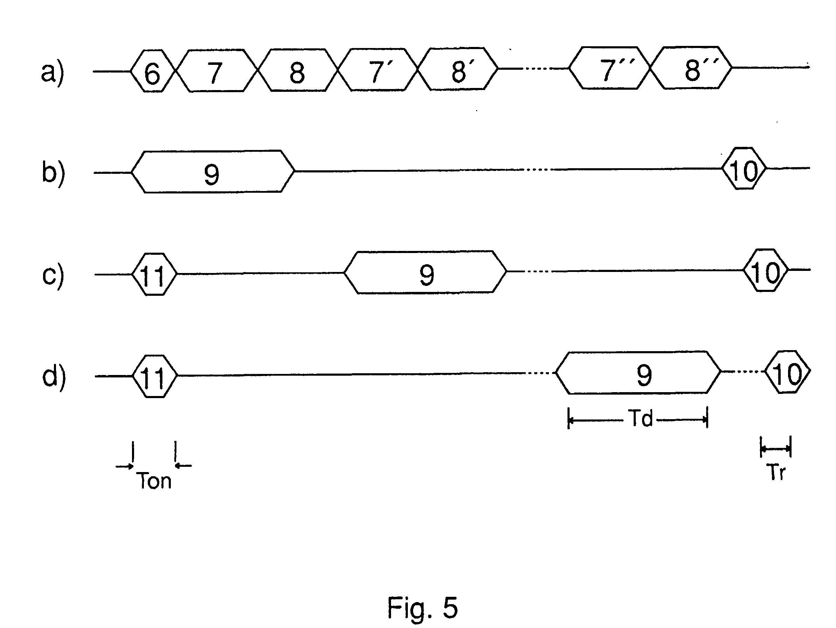

Die Figur 5 stellt die Datenübertragung zwischen dem Steuersender a) und drei Anzeigeeinheiten b), c) und d) dar. Die Anzeigeeinheiten werden unmittelbar nacheinander adressiert und senden im Anschluß daran in ihnen zugeordneten Zeitfenstern Rückmeldungen (10) ab. Wie in Figur 4 sind alle Anzeigeeinheiten synchronisiert, so daß sich die Einleitung (6) nur über die Zeit Tₒₙ erstreckt, so daß gewährleistet ist, daß alle Anzeigeeinheiten (wieder) synchronisiert sind. Die Anzeigeeinheiten sind zeitlich gemultiplext, wobei jeder von ihnen ein spezifisches Zeitfenster zugeordnet ist, in dem sie die Adressierung und Daten empfangen kann. Nach dem Empfang (11) einer Einleitung (6) durch Anzeigeeinheit schaltet sie ihren Empfänger entsprechend ihrer Nummer nur im jeweiligen Zeitfenster ein. Zunächst bleibt daher nur die Anzeigeeinheit b) im Empfangs-Modus (9) und empfängt die zugeordnete Adressierung (7) und Daten (8). Im Anschluß daran geht die Anzeigeeinheit c) in den Empfangsmodus (9) über, und empfängt die Adressierung (7') und Daten (8'). Schließlich beginnt auch die Anzeigeeinheit d) mit dem Empfangs-Modus (9) und erhält ihre Adressierung (7'') und Daten (8''). In diesem System überträgt jede Anzeigeeinheit ihre Empfangs-Bestätigung (10) in einem zugeordneten Zeitfenster, so daß der zentrale Computer (1) jede Antwort den Anzeigeeinheiten anhand des Zeitpunktes des Empfangs zuordnen kann.

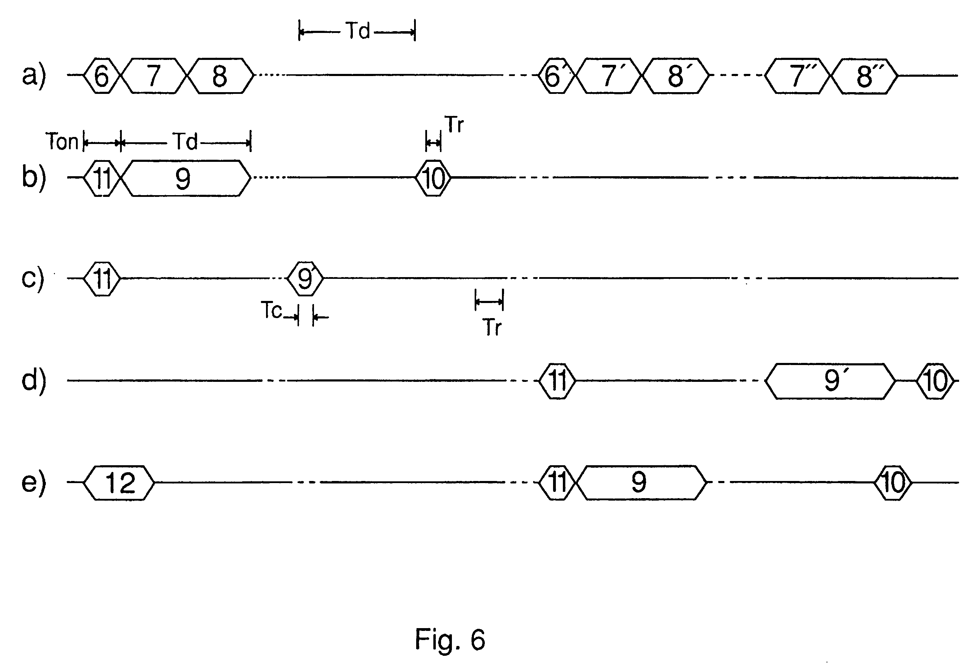

Figur 6 stellt die Datenübertragung zwischen dem Steuersender a) und vier Anzeigeeinheiten dar, die in zwei Gruppen zu jeweils zwei Einheiten [b) und c) bzw. d) und e)] unterteilt sind. Die Anzeigeeinheiten b) und c) der ersten Gruppe gehen bei der Ausstrahlung der Einleitung (6) zeitlich nacheinander in den Empfangs-Modus (9 bzw. 9') über und nur die aktualisierte Anzeigeeinheit b), an die eine Adressierung (7) und Daten (8) übertragen wurden, sendet anschließend eine Bestätigung (10) aus. Die Anzeigeeinheit c) bleibt nur für den Zeitraum Tₒₙ + T_{c} im Empfangs-Modus (9') und emittiert im zugeordneten Zeitfenster keine Antwort, um Energie zu sparen. Anschließend gehen die Anzeigeeinheiten d) und e) der zweiten Gruppe synchron mit dem Empfang (11) einer zweiten Einleitung (6') in den Empfangs-Modus (9 bzw. 9') über, empfangen die ihnen zugeordneten Adressierungen (7' bzw. 7'') und Daten (8' bzw. 8'') und strahlen schließlich in den jeweiligen Zeitfenstern Bestätigungen (10) aus. Die anfänglich unsynchronisierte Anzeigeeinheit e) ist anfangs in einem Synchronisierungs-Modus (12), in dem sie mittels der ersten Einleitung (6), die der anderen Gruppe zugeordnet ist, ihre interne Uhr aktualisiert. Die Anzeigeeinheit d) ist hingegen synchronisiert und beginnt erstmals synchron mit der ihrer Gruppe zugeordneten Einleitung (6') mit dem Empfang (11).

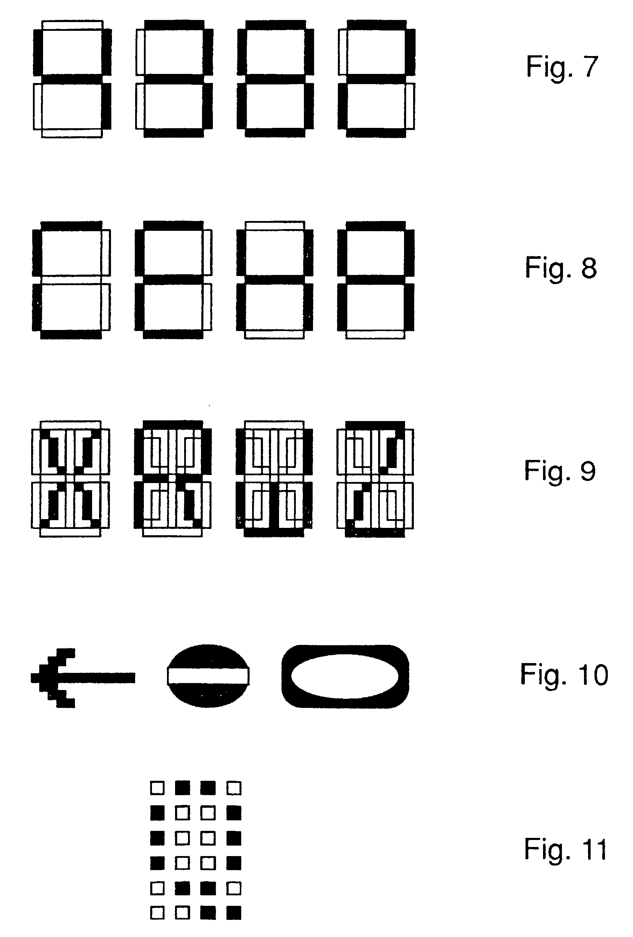

Die Figuren 7 bis 11 zeigen schließlich unterschiedliche Anzeigeelemente, die in erfindungsgemäßen Anzeigeeinheiten verwendet werden können. Figur 7 stellt eine Sieben-Segment-Anzeige dar, die die Ziffern 4 3 8 2 wiedergibt. In Figur 8 werden mittels derselben Anzeigen die Buchstaben C E H A dargestellt. Die Figur 9 zeigt sogenannte Starburst-Anzeigen, die außer horizontalen und vertikalen auch diagonale Segmente (insgesamt jeweils 14) aufweisen. Sie stellen die Buchstaben X R W Z dar. Die Figur 10 zeigt spezielle Symbole, die mittels einer einzigen Binärinformation aktiviert werden können. Von links nach rechts sind ein Pfeil, ein "Einfahrt-verboten-" Schild und ein Oval in einem Rechteck erkennbar. Figur 11 stellt eine Punktmatrix dar, die den Buchstaben Q wiedergibt.

Im Ergebnis erhält man eine Anlage zur elektronischen Preisanzeige, die sich durch geringen Energiebedarf und vielfältige Variationsmöglichkeiten der Anzeigeelemente auszeichnet.

## Patentansprüche

1. Anlage zur elektronischen Preisanzeige, mit einem Computer (1), einem daran angeschlossenen Steuersender (2) sowie vorzugsweise an Regalen befestigten, elektronischen Anzeigeeinheiten (4), wobei
der Steuersender (2) mittels elektromagnetischer Wellen (5) Datenübertragungsblöcke zur Aktualisierung der Anzeigeeinheiten (4) überträgt, die die spezifische Adresse (7) einer Anzeigeeinheit (4) und die anzuzeigenden Daten (8) beinhalten,
die Anzeigeeinheiten (4) einen Empfänger zur Aufnahme der Datenübertragungsblöcke enthalten, der periodisch aktiviert wird,
die Anzeigeeinheiten (4) Einrichtungen zum synchronen Einschalten der Empfänger aufweisen, die die Empfänger gleichzeitig mit dem Beginn der Ausstrahlung eines Datenübertragungsblockes durch den Steuersender (2) aktivieren,
die Anzeigeeinheiten (4) eine interne Uhr zur Aktivierung der Empfänger enthalten,
die interne Uhr mittels vom Steuersender (2) abgestrahlter Synchronisationssignale aktualisiert wird, die den Datenübertragungsblöcken vorangestellt sind oder ihnen folgen oder darin enthalten sind,
**dadurch gekennzeichnet, daß** der Empfänger einer nicht synchronisierten Anzeigeeinheit (4) so lange periodisch aktiviert wird, bis er ein Synchronisationssignal empfängt, wobei die Periodendauer von der Zeit zwischen zwei Synchronisationssignalen abweicht.

2. Anlage nach Anspruch 1, **dadurch gekennzeichnet, daß** der Computer (1) Datenpakete für unterschiedliche Anzeigeeinheiten (4) unmittelbar nacheinander überträgt.

3. Anlage nach Anspruch 2, **dadurch gekennzeichnet, daß** die Anzeigeeinheiten (4) Einrichtungen aufweisen, die die Empfänger nach dem Empfang der Einleitung (6) eines Datenübertragungsblockes ausschalten und bis Beginn der Übertragung eines ihnen zugeordneten Datenpaketes durch den Steuersender (2) ausgeschaltet halten.

4. Anlage nach einem der Ansprüche 1 bis 3, **dadurch gekennzeichnet, daß** jeder Anzeigeeinheit (4) ein eigenes Zeitfenster (10) zugeordnet ist, das der Phase der Datenübertragung vom Computer (1) auf die Anzeigeeinheiten (4) folgt, und in dem die Anzeigeeinheit (4) elektromagnetische Wellen (5) zur Bestätigung des Empfanges an sie adressierter Daten (8) an den Computer (1) abstrahlt.

5. Anlage nach einem der Ansprüche 1 bis 4, **dadurch gekennzeichnet, daß** die Anzeigeeinheiten (4) in logische Gruppen unterteilt sind, deren Empfänger synchron eingeschaltet werden, wobei die Einschaltzeitpunkte der Empfänger der Anzeigeeinheiten (4) unterschiedlicher Gruppen voneinander abweichen.

6. Anlage nach Anspruch 5, **dadurch gekennzeichnet, daß** die Anzeigeeinheiten (4) unabhängig von ihrer Position und/oder der Art des Artikels, dessen Preis sie anzeigen, in logische Gruppen eingeteilt sind.

7. Anlage nach einem der Ansprüche 1 bis 6, **dadurch gekennzeichnet, daß** der Steuersender (2) Daten (8) an die Anzeigeeinheiten (4) überträgt, bei denen eine Binärinformation einem einzelnen Segment der Anzeigeelemente der Anzeigeeinheit (4) entspricht.

8. Anlage nach einem der Ansprüche 1 bis 7, **dadurch gekennzeichnet, daß** die Anzeigeelemente Sieben-Segment- und/oder Starburst- und/oder Punktmatrix- und/oder beliebig geformte Anzeigen sind.

9. Anlage nach einem der Ansprüche 1 bis 8, **dadurch gekennzeichnet, daß** die Anzeigeelemente der Anzeigeeinheiten (4) Flüssigkristall-Anzeigen sind.

10. Anlage nach der Anspruch 7 oder 9, **gekennzeichnet durch** Buchstaben wiedergebende Sieben-Segment-Anzeigen.

11. Anlage nach einem der Ansprüche 1 bis 10, **dadurch gekennzeichnet, daß** die Anzeigeeinheiten (4) durch Batterien und/oder Akkumulatoren und/oder Solarzellen mit elektrischem Strom versorgt werden.

12. Anlage nach einem der Ansprüche 1 bis 11, **dadurch gekennzeichnet, daß** die Datenpakete durch Radio- oder Infrarotwellen übertragen werden.

## Claims

1. system for the electronic display of prices, having a computer (1), a control transmitter (2) connected thereto and also electronic display units (4) which are preferably secured to shelves, wherein the control transmitter (2) transmits by means of electromagnetic waves (5) data transmission blocks for updating the display units (4), which blocks comprise the specific address (7) of a display unit (4) and the data (8) that is to be displayed, the display units (4) contain a receiver for picking up the data transmission blocks, which receiver is activated periodically, the display units (4) have devices for synchronously switching on the receivers, which devices activate the receivers simultaneously with the beginning of the emission of a data transmission block by the control transmitter (2), the display units (4) contain an internal clock for activating the receivers, the internal clock is updated by means of synchronization signals that are emitted by the control transmitter (2) and which precede the data transmission blocks or follow them or are contained therein, **characterised in that** the receiver of a non-synchronized display unit (4) is activated periodically for so long until it receives a synchronization signal, with the length of the period differing from the time between two synchronization signals.

2. System according to claim 1, **characterised in that** the computer (1) transmits data packets for different display units (4) in direct succession.

3. System according to claim 2, **characterised in that** the display units (4) have devices which switch off the receivers after reception of the start (6) of a data transmission block and keep them switched off until the beginning of the transmission by the control transmitter (2) of a data packet associated with them.

4. System according to one of claims 1 to 3, **characterised in that** associated with each display unit (4) there is a time window (10) that is peculiar thereto and which follows the phase of the data transmission from the computer (1) to the display units (4) and in which the display unit (4) emits electromagnetic waves (5) to the computer (1) to acknowledge the reception of data (8) addressed to it, the display unit (4).

5. System according to one of claims 1 to 4, **characterised in that** the display units (4) are subdivided into logical groups, the receivers of which are switched on synchronously, with the times at which the receivers of the display units (4) of different groups are switched on differing from each other.

6. System according to claim 5, **characterised in that** the display units (4) are divided into logical groups irrespective of their position and/or the type of article whose price they display.

7. System according to one of claims 1 to 6, **characterised in that** the control transmitter (2) transmits data (8) to the display units (4) in which an item of binary information corresponds to an individual segment of the display elements of the display unit (4).

8. System according to one of claims 1 to 7, **characterised in that** the display elements are seven-segment displays and/or starburst displays and/or dot matrix displays and/or displays formed in any way.

9. System according to one of claims 1 to 8, **characterised in that** the display elements of the display units (4) are liquid-crystal displays.

10. , System according to claim 7 or 9, **characterised by** seven-segment displays that reproduce letters.

11. System according to one of claims 1 to 10, **characterised in that** the display units (4) are supplied with electric current by batteries and/or accumulators and/or solar cells.

12. System according to one of claims 1 to 11, **characterised in that** the data packets are transmitted by means of radio or infrared waves.

## Revendications

1. Appareil pour l'affichage électronique des prix, équipé d'un ordinateur (1), d'un émetteur de commande (2) raccordé à l'ordinateur et d'unités d'affichage (4) électroniques et fixés de préférence sur des étagères,
moyennant quoi l'émetteur de commande (2) transmet au moyen d'ondes (5) électromagnétiques des blocs de transmission de données pour la mise à jour des unités d'affichage (4), qui contiennent l'adresse (7) spécifique d'une unité d'affichage (4) et les données à afficher (8),
les unités d'affichage (4) contiennent un récepteur pour la réception des blocs de transmission de données, qui est activé de façon périodique,
les unités d'affichage (4) présentent des appareils pour la mise en circuit synchrone des récepteurs, qui activent les récepteurs en même temps que le début de l'envoi d'un bloc de transmission de données par l'émetteur de commande (2),
les unités d'affichage (4) contiennent une horloge interne pour l'activation des récepteurs,
l'horloge interne étant actualisée au moyen de signaux de synchronisation émis par l'émetteur de commande (2), qui sont placés en tête des blocs de transmission de données ou les suivent ou sont inclus dedans,
**caractérisé en ce que** le récepteur d'une unité d'affichage (4) non synchronisée est activé de façon périodique jusqu'à ce qu'il reçoive un signal de synchronisation, la durée de la période étant différente de la durée entre deux signaux de synchronisation.

2. Appareil selon la revendication 1, **caractérisé en ce que** l'ordinateur (1) transmet directement les uns après les autres des paquets de données pour des unités d'affichage (4) différentes.

3. Appareil selon la revendication 2, **caractérisé en ce que** les unités d'affichage (4) présentent des équipements qui déconnectent les récepteurs après la réception de l'envoi (6) d'un bloc de transmission de données et les maintiennent déconnectés jusqu'au début de la transmission d'un paquet de données qui leur est attribué par l'émetteur de commande (2).

4. Appareil selon l'une quelconque des revendications 1 à 3, **caractérisé en ce qu'**à chaque unité d'affichage (4) est attribuée une fenêtre de temps (10) propre, qui suit la phase de la transmission de données de l'ordinateur (1) aux unités d'affichage (4), et dans la laquelle l'unité d'affichage (4) envoie à l'ordinateur (1) des ondes (5) électromagnétiques pour la confirmation de la réception de données (8) adressées à elle.

5. Appareil selon l'une quelconque des revendications 1 à 4, **caractérisé en ce que** les unités d'affichage (4) sont subdivisées en groupes logiques dont les récepteurs sont enclenchés de façon synchrone, les instants de mise en route des récepteurs des unités d'affichage (4) de groupes différents étant différents.

6. Appareil selon la revendication 5, **caractérisé en ce que** les unités d'affichage (4) sont divisées en groupes logiques indépendamment de leur position et/ou de la nature de l'article, dont elles affichent le prix.

7. Appareil selon l'une quelconque des revendications 1 à 6, **caractérisé en ce que** l'émetteur de commande (2) transmet des données (8) aux unités d'affichage, pour lesquelles une information binaire correspond à un segment individuel des éléments d'affichage de l'unité d'affichage (4).

8. Appareil selon l'une quelconque des revendications 1 à 7, **caractérisé en ce que** les éléments d'affichage sont des unités à sept segments et/ou des affichages Starburst et/ou des affichages à matrice à points et/ou des affichages à forme quelconque.

9. Appareil selon l'une quelconque des revendications 1 à 8, **caractérisé en ce que** les éléments d'affichage des unités d'affichage (4) sont des affichages à cristaux liquides.

10. Appareil selon la revendication 7 ou 9, **caractérisé par** des affichages à sept segments reproduisant des lettres.

11. Appareil selon l'une quelconque des revendications 1 à 10, **caractérisé en ce que** les unités d'affichage (4) sont alimentées en courant électrique par des batteries et/ou des accumulateurs et/ou des cellules solaires.

12. Appareil selon l'une quelconque des revendications 1 à 11, **caractérisé en ce que** les paquets de données sont transmis par des ondes radio ou infrarouges.
